# EUROPÄISCHE PATENTSCHRIFT

(11) **EP 1 518 306 B1**
(45) Veröffentlichungstag und Bekanntmachung des Hinweises auf die Patenterteilung: **15.02.2006**
(21) Anmeldenummer: 03760523.5
(22) Anmeldetag: 11.04.2003
(51) Int. Cl.: H02B 1/052

(54) **SCHNELLBEFESTIGUNG**
QUICK-FIXING DEVICE
DISPOSITIF DE FIXATION RAPIDE

(30) Priorität: 25.06.2002 AT 9492002
(43) Veröffentlichungstag der Anmeldung: 30.03.2005
(73) Patentinhaber: Moeller Gebäudeautomation KG, 3943 Schrems (AT)
(72) Erfinder: TETIK, Adolf, A-1180 Wien (AT)
(74) Vertreter: Gibler, Ferdinand
(86) Internationale Anmeldenummer: PCT/AT2003/000106
(87) Internationale Veröffentlichungsnummer: WO 2004/001921

(56) Entgegenhaltungen:
- DE-A- 19 709 809
- DE-U- 7 522 267
- US-A- 5 297 002

## Beschreibung

Die Erfindung betrifft eine Vorrichtung zur lösbaren Schnellbefestigung von Gehäusen elektrischer Reiheneinbaugeräte gemäß dem Oberbegriff des Anspruches 1.

Eine solche Vorrichtung wurde z.B. durch die DE 40 34 307 C1 bekannt. Bei dieser bekannten Lösung ist das Kopplungselement U-förmig ausgebildet. Dabei befindet sich der Betätigungsabschnitt im montierten Zustand des Reiheneinbaugerätes im der Montageschiene nächsten Bereich an der Unterseite des Gehäuses.

Dabei ergibt sich jedoch der Nachteil, dass der Betätigungsabschnitt des Kopplungselementes nur relativ schwer zugänglich ist, insbesondere, wenn eine Vielzahl von Reiheneinbaugeräten an mehreren untereinander angeordneten Montageschienen befestigt werden sollen. In einem solchen Fall müssen relativ große Abstände zwischen den Montageschienen vorgesehen werden, wodurch sich ein entsprechend großer Platzbedarf in einem Schaltschrank ergibt.

Weiters wurde durch die DE 75 22 267 U1 eine Vorrichtung zur lösbaren Befestigung eines Reiheneinbaugerätes bekannt, bei der an einer Seitenwand des Gerätes ein zweiarmiger Hebel gelagert ist, dessen eines Ende hakenförmig ausgebildet ist und in der Befestigungsstellung die Montageschiene hintergreift. Der zweite Arm, der Betätigungsarm, ist zwischen zwei Rasten verschwenkbar.

Bei dieser Lösung ergibt sich der Nachteil, dass das Reiheneinbaugerät seitlich zugänglich sein muss, um das Kopplungselement mittels eines Werkzeuges betätigen zu können.

Ziel der Erfindung ist es, diese Nachteile zu vermeiden und eine Vorrichtung der eingangs erwähnten Art vorzuschlagen, die eine einfache, werkzeuglose Betätigung des Kopplungselementes bei montiertem Reiheneinbaugerät und eine optimale Platzausnützung im Schaltschrank ermöglicht.

Erfindungsgemäß wird dies bei einer Vorrichtung der eingangs erwähnten Art durch die kennzeichnenden Merkmale des Anspruches 1 erreicht

Durch die vorgeschlagenen Maßnahmen wird erreicht, dass das Kopplungselement von der Vorderseite des Reiheneinbaugerätes her von Hand aus betätigt werden kann und daher die Reiheneinbaugeräte eng nebeneinander montiert werden können und auch mehrere Reihen von Einbaugeräten untereinander in geringem Abstand angeordnet werden können.

Um die Betätigung des Kopplungselementes besonders einfach gestalten zu können, ist es vorteilhaft die Merkmale des Anspruches 2 vorzusehen. Durch die vorgeschlagenen Maßnahmen kann die Betätigung des Kopplungselementes in einem Bereich der Vorderseite des Reiheneinbaugerätes erfolgen, der aufgrund der Gestalt des Gehäuses des Gerätes am zweckmäßigsten ist, d.h. eine besonders gute Zugänglichkeit aufweist.

Die Erfindung wird unter Bezugnahme auf die beigeschlossenen Zeichnungen, in welchen besonders bevorzugte Ausführungsbeispiele dargestellt sind, näher beschrieben. Dabei zeigen:

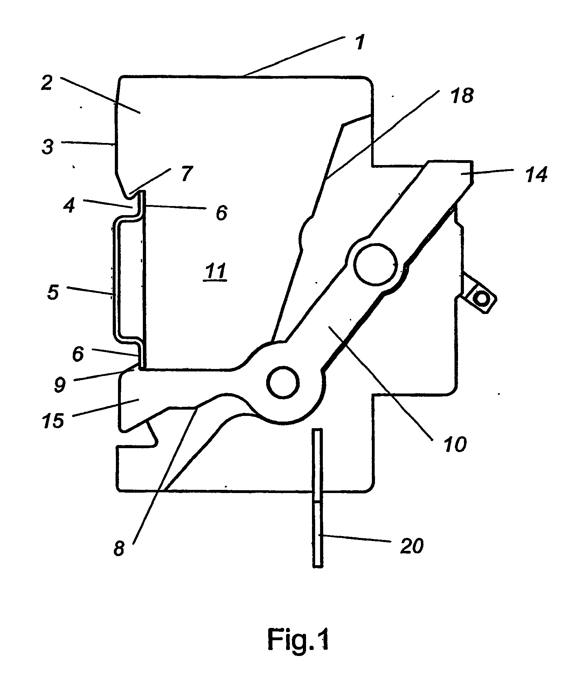

Fig. 1 eine Seitenansicht eines Reiheneinbaugerätes mit einer erfindungsgemäßen Vorrichtung,

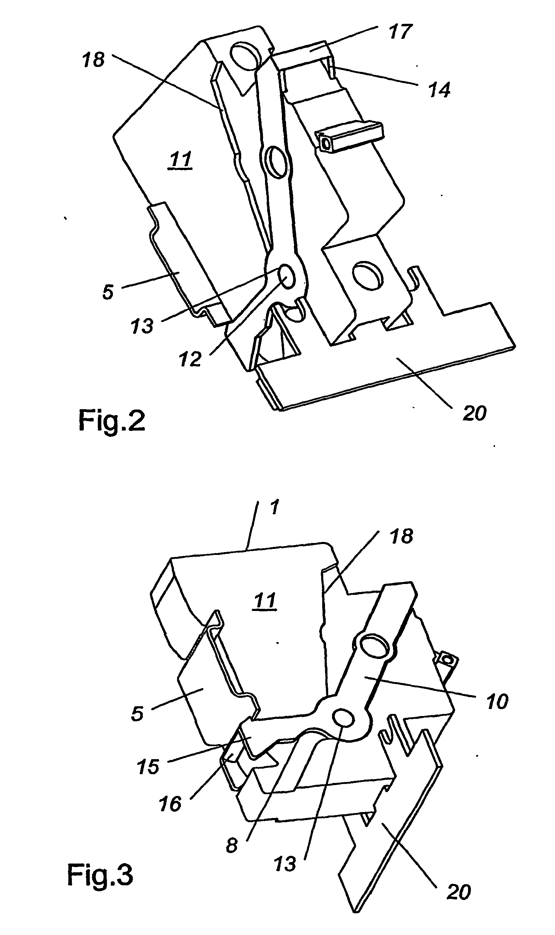

Fig. 2 und Fig. 3 axonometrische Darstellungen des Reiheneinbaugerätes im montierten Zustand aus zwei verschiedenen Blickwinkeln.

Ein Reiheneinbaugerät 1, das beim dargestellten Ausführungsbeispiel durch einen Sicherungsautomaten gebildet ist, ist mit einer Vorrichtung an einer Montageschiene 5 fixiert.

Weiters ist das Einbaugerät 1 an einer Stromschiene 20 angeschlossen.

Das Reiheneinbaugerät 1 weist ein Gehäuse 2 auf, das an einer Schmalseite 3 mit einer Ausnehmung 4 zur Aufnahme der Montageschiene 5 versehen ist. Dabei weist die Montageschiene 5 zwei nach außen abgewinkelte Leisten 6 auf, von denen eine durch eine Nase 7 des Gehäuses 2 übergriffen ist. Die zweite Leiste 6 der Montageschiene 5 ist von einem Haken 9 eines Kopplungselements 8 übergriffen.

Das Kopplungselement 8 ist im wesentlichen durch einen zweiarmigen Hebel 10 gebildet, dessen beide Schenkel V-förmig abgewinkelt sind. Dabei ist der zweiarmige Hebel 10 im Bereich der Verbindung der beiden Schenkel schwenkbar gelagert, wobei der zweiarmige Hebel 10 an aus den Seitenwänden 11 des Gehäuses 2 aufragenden koaxial angeordnete Zapfen 12 gelagert ist, die in Bohrungen 13 des Hebels 10 eingreifen.

Der Hebel 10 ist doppelt ausgeführt und liegt an den beiden Seitenwänden 11 des Gehäuses 2 an. Dabei sind an einem Betätigungsende 14 und an einem Rastende 15, das den Haken 9 aufweist, Bügel 16, bzw. 17 vorgesehen, die die beiden Teile des doppelt ausgeführten Hebels 10 miteinander verbinden.

Das Kopplungselement 8 ist in einer Abstufung 18 der Seitenwände 11 des Gehäuses 2 um einen Winkelbetrag verschwenkbar, wobei das Kopplungselement 8 in zwei Endstellungen verrastbar ist.

In einer Stellung übergreift der Haken 9 des Kopplungselements 8 eine Leiste 6 der Montageschiene 5. Dabei übergreift der Bügel 17 einen Abschnitt der von der Ausnehmung 4 abgewandten Vorderseite des Gehäuses 2. In der zweiten Raststellung liegt das Betätigungsende 14 des Hebels 10 an der Abstufung 18 der Seitenwände 11 an, wobei das Rastende 15 bzw. dessen Haken 9 von der Leiste 6 der Montageschiene 5 weggeschwenkt ist, wodurch das Reiheneinbaugerät 1 von der Montageschiene 5 weggeschwenkt werden und danach von dieser abgehoben werden kann.

Bei der Montage des Reiheneinbaugehäuse 1 wird dieses an die Leiste 6 der Montageschiene 5 mit der Nase 7 gehängt und danach an die Montageschiene 5 angepreßt, wonach der Hebel 10 in die dargestellte Raststellung geschwenkt wird. Dadurch greift der Haken 9 des Rastendes hinter die Leiste 6 der Montageschiene 5, wodurch das Einbaugerät fixiert ist.

Dabei kann das Kopplungselement 8 allein von der Vorderseite des Reiheneinbaugerätes 1 betätigt werden.

## Patentansprüche

1. Vorrichtung zur lösbaren Schnellbefestigung von Gehäusen (2) elektrischer Reiheneinbaugeräte (1), wie Schutzschalter oder Sicherungsautomaten u. dgl. an einer profilierten Montageschiene (5), bestehend aus einem Gehäuse (2), das eine Aufnahme (4) für die Montageschiene (5) aufweist, wobei an dem Gehäuse (2) ein über Zapfen (12) angelenktes Kopplungselement (8) gehalten ist, das ein Rastende (15) mit einem die Montageschiene (5) in der Befestigungsstellung hintergreifenden Haken (9) und einen Betätigungsabschnitt (14) aufweist, der an dem Gehäuse (2) in der Befestigungsstellung des Kopplungslementes (8) verrastbar ist, wobei das Kopplungselement (8) als zweiarmiger Hebel ausgebildet ist, der an mindestens einer Seitenwand (11) des Gehäuses (2) des Reiheneinbaugerätes (1) gelagert ist und der Betätigungsabschnitt (14) das Gehäuse (2) übergreift, **dadurch gekennzeichnet, dass** der Betätigungsabschnitt (14) eine von der Aufnahme (4) für die Montageschiene (5) abgekehrte Vorderseite des Gehäuses (2) übergreift und von der Vorderseite betätigbar ist.

2. Vorrichtung gemäß Anspruch 1, **dadurch gekennzeichnet, dass** das Kopplungselement (8) V-förmig ausgebildet ist, das im Bereich der Verbgindungsstelle der beiden Arme des Kopplungselementes (8) gelagert ist.

## Claims

1. An apparatus for the detachable quick fastening of housings (2) of electric series installation devices (1) such as circuit breakers or automatic circuit breakers and the like to a profiled mounting rail (5), consisting of a housing (2) comprising a receiver (4) for the mounting rail (5), with a coupling element (8) being held on the housing in an articulated manner via a pin (12), which element comprises a latching end (15) with a hook (9) grasping behind the mounting rail (5) in the fastening position and an actuating section (14) which can be latched in the housing (2) in the fastening position of the coupling element (8), with the coupling element (8) being configured as a two-arm lever which is held on at least one side wall (11) of the housing (2) of the series installation device (1) and the actuating section (14) overlaps the housing (2), **characterized in that** the actuating section (14) overlaps a front side of the housing (2) averted from the receiver (4) for the mounting rail (5) and can be actuated by the front side.

2. An apparatus according to claim 1, **characterized in that** the coupling element (8) is provided with a V-shaped configuration which is held in the region of the connecting point of the two arms of the coupling element (8).

## Revendications

1. Dispositif pour la fixation rapide amovible de boîtiers (2) d'appareils électriques encastrables montés en série (1) tels que des disjoncteurs ou des interrupteurs automatiques ou similaire sur un rail de montage (5) profilé, constitué par un boîtier (2) comportant un logement (4) pour le rail de montage (5), un élément de couplage (8) articulé par l'intermédiaire de pivots (12) étant retenu sur le boîtier (2), cet élément de couplage comportant une extrémité d'encliquetage (15) avec un crochet (9) venant s'engager derrière le rail de montage (5) dans la position fixée et une portion d'actionnement (14) qui est apte à être encliquetée sur le boîtier (2) dans la position fixée de l'élément de couplage (8), l'élément de couplage (8) étant conformé en forme de levier à deux bras en appui contre au moins une paroi latérale (11) du boîtier (2) de l'appareil encastrable monté en série (1) et la portion d'actionnement (14) enjambant sur le boîtier (2), **caractérisé en ce que** la portion d'actionnement (14) enjambe sur une face avant du boîtier (2) détournée du logement (4) pour le rail de montage (5) et est apte à être actionnée depuis la face avant.

2. Dispositif selon la revendication 1, **caractérisé en ce que** l'élément de couplage (8) est conformé en forme de V et est monté à la hauteur de la jonction des deux bras de l'élément de couplage (8).
